# EUROPEAN PATENT APPLICATION

(11) **EP 2 543 717 A1**
(43) Date of publication of application: **09.01.2013**
(21) Application number: 11173252.5
(22) Date of filing: 08.07.2011
(51) Int. Cl.: C10L 5/44, C10L 9/08, C10L 5/46

(54) **An integrated process for firing of biomass and/or waste in existing solid fuel fired power plants, and a solid fuel power plant for firing of biomass and/or waste materials**

(71) Applicant: Remak-Rozruch SA, 45-324 Opole 16 (PL); Energa Elektrownie Ostroleka SA, 07-401 Ostroleka (PL); Indcomb AB, 131 50 Saltsjö-Duvnäs (SE)
(72) Inventor: Pchelka, Franciszek, 03-206 Warszawa (PL); Brzdekiewicz, Artur, 42-200 Czestochowa (PL); Wladyslaw, Madaj, 52-016 Wroclaw (PL); Mrozek, Piotr, 07-409 Ostroleka (PL); Blasiak, Wlodzimierz, 131 50 Saltsjo-Dunvas (SE); Yang, Weihong, 187 70 Täby (SE)
(74) Representative: Allee, Harriet Eva Charlotta

(57) **Abstract**

The present invention relates to an integrated process for firing of biomass and/or waste in existing dust fired power plants, such as coal fired boilers with a maximum of biomass utilization and efficiency and minimum emission in the power plant, which process includes torrefaction of the biomass and/or waste. The present invention also relates to solid fuel fired power plant for firing or cofiring of biomass and/or waste materials, which power plant can use an existing dust fired bo iler.

## Description

### FIELD OF THE INVENTION

The present invention relates to an integrated process for firing of biomass and/or waste in existing dust fired power plants, such as coal fired boilers with a maximum of biomass utilization and efficiency and minimum emission in the power plant, which process includes torrefaction of the biomass and/or waste. The present invention also relates to a dust fired power plant for firing or cofiring of biomass and/or waste materials, which power plant can use an existing dust fired boiler.

### DESCRIPTION OF THE PRIOR ART

Biomass and coal co-combustion represents a near-term, low-risk, low-cost, sustainable, renewable energy option that promises reduction in effective CO₂ emissions, reduction in SOx and often also in NOx emissions, and several societal benefits. For example, by means of a 5% cofiring of biomass with coal in the global power generation, we can get 40 GW, about 300 Mton CO₂/year.

Over the past 5-10 years there has been remarkably rapid progress in the development of cofiring. Several power plants have been retrofitted for demonstration purposes, while another number of new plants are already being designed for involving biomass co-utilization with fossil fuels. Approximately 40 pulverized-coal fired power plants worldwide are cofiring biomass on a commercial basis, the average extent of the cofiring being about 3% of the energy input. This leads to a 3.5 Mton of coal being substituted, and corresponds to a CO₂ reduction of about 10 Mton. Furthermore, the co-firing potential is huge, the EU contributes to about 50.,000 MWe, and the world contributes to 160,000 MWe (corresponding to about 50-160 nuclear power plants).

Biomass is able to penetrate all energy sector markets, but economical constraints still limit its general deployment. Therefore, sustainable biomass schemes need to be promoted. The economics of biomass cofiring are significantly impacted by the twin factors of deregulation and environmental requirement. Uncertainties in both arenas make investment in most, or all, biomass cofiring technologies difficult to justify. Consequently, biomass cofiring has become a tool for use in niche applications where relatively high coal costs and relatively abundant biomass converge. Such niches also require favourable regulatory treatment without the threat of New Source Review. Further on, new regulations force power sector to use biomass of agricultural origin, for examples, LCPD (Large Combustion Plant Directive), NECD (National Emission Ceilings Directive) and IPPCD (Integrated Pollution Prevention and Control Directive). Those regulations obviously promote a large percentage (above 40 %) of biomass co-firing to be used by power sector.

Combustion behaviours of biomass are different from coal's. Biomass yields a much higher fraction of its mass through devolatilization than does coal. Typically, biomass of the size and under the heating rates typical of pc-cofiring yields 90-95% of its dry, inorganic-free mass during devolatilization, compared with 55-60% for most coals.

As a concept biomass represents a wide range of materials with heterogeneous composition such as wood, agricultural residues, and fast growing trees. However, untreated woody biomass has a relatively low energy density, low bulk density, high moisture content and is difficult to comminute into small particles. As a matter of fact, these properties make biomass transportation expensive. Moreover, it can absorb moisture during storage and may rot as well. These properties can have negative impacts during energy conversion such as lower combustion efficiencies and gasifier design limitations. Therefore, enhancement of its properties is advisable not only to improve its inferior characteristics, but also to make it a suitable alternative for fossil fuel, such as coal.

In order to address those problems, biomass is required to be pretreated to improve its quality. In recent time, several pretreatment technologies have been introduced to improve the biomass quality as a fuel. Torrefaction, a thermal treatment, is a promising method to preprocess low quality biomass into high energy density feedstock with consistent and uniform physical and chemical characteristics.

Biomass consists of three main components, namely hemicellulose, cellulose and lignin. Among those three polymeric constituents, cellulose has received more attention considering thermal decomposition due to higher fraction in biomass.

Further on, biomass has the features of diversities. Some biomass, such as shell, is an oily material. This further increases the difficulties of grindibility.

WO 2010/128209 A1 discloses a method for thermal treatment of biomass in connection with a boiler plant, especially dust-fired boilers. In the process hot flue gasses from the boiler are passed from the combustion process to a reactor for biomass torrefaction. Thermally treated biomass may be passed to coal mills like coal without having to restrict the mixing ratio of the biomass to coal to about 10%. WO 2010/128209 A1 also suggests that the thermally treated biomass can be used as fuel in the boiler.

EP 2 017 325 A2 discloses an apparatus and method for decomposition of vegetable organic substances and thermochemical fuel gas production. The method includes drying an organic substance in a dryer to obtain dried biomass, torrefaction of said biomass, pulverization of the torrefied biomass in a milling device, pyrolysis of the pulverized biomass in a pyrolysis stage into which superheated steam is supplied for obtaining solid substances as well as condensable and incondensable gases, gasification of the solid substances in a gasification stage for producing fuel gas. In a preferred embodiment the apparatus also comprises a burner, into which the solid residues leaving the gasification stage can be entered and burned in order to provide energy for the general operation of the apparatus. The combustion products generated in the burner can be led back to the gasification, pyrolysis and torrefaction stages in tubes for providing heat to said stages. The method disclosed therein is stated to be applicable to a thermal power range between approx. 0.1 MW and approx. 10 MW, with reference to the energy content of the feed material used.

US 6,694,900 A2 discloses integration of direct combustion with gasification for reduction NOx emissions. In the method disclosed in US 6,694,900 A2, gaseous products obtained from the gasification of at least one low grade solid fuel, such as coal, biomass or waste products, is utilized in the combustion of a main fuel. The gaseous products are injected into the post combustion zone of the combustion system in order to reduce emissions of nitrogen oxides from said system.

It is an object of the present invention to further improve the method disclosed in WO 2010/128209 A1.

### SUMMARY OF THE INVENTION

The present inventors have found that the general method disclosed in WO 2010/128209 A1 can be improved by using heated gases obtained from the torrefaction for providing the necessary heat for the torrefaction.

Accordingly, in one aspect the present invention relates to a process comprising the following steps:
feeding a solid biomass and/or waste material 1,15 to a torrefaction reactor 20;
heating the biomass in the torrefaction reactor at conditions effective for torrefaction of the biomass;
passing gaseous reaction products 70,80 generated in the torrefaction reactor to a combustion process in a boiler 40;
passing the torrefied biomass 21,26 to a milling device 35; and
feeding an additional, particulate fuel 36,37 to the combustion process in said boiler, which particulate fuel comprises the milled, torrefied biomass,
wherein a portion of the gaseous reaction products generated in the torrefaction reactor are passed to a gas-to-gas heat exchanger 30 for heating of the gases, and the heated gases 60 thereafter are being passed back into the torrefaction reactor for providing the necessary heat for the torrefaction.

As opposed to the method of EP 2 017 325 A2, the claimed method does not include separate gasification and pyrolysis steps. Instead, the milled, torrefied biomass is burned in a boiler, optionally together with e.g. coal, without any intervening gasification and pyrolysis steps.

According to the inventive process, and, as opposed to the method of WO 2010/128209 A1, introduction of flue gasses into the torrefaction reactor is not required. Flue gasses will always contain a certain amount of oxygen, typically about 6%, and sometimes more. The use of flue gases in the torrefaction process will therefore lead to undesired oxidation or combustion of the biomass entering the torrefaction reactor.

In a preferred embodiment hot flue gasses from the combustion in the boiler are used for heating the portion of gaseous reaction products generated in the torrefaction reactor, which portion is being passed to the heat exchanger.

In order to reduce NOx, in a preferred embodiment the heated gaseous reaction products generated in the torrefaction reactor which are being passed to the boiler are entered into the boiler at the upper portion thereof as a reburning fuel.

In a preferred embodiment, the process includes the additional step of drying the biomass. The necessary heat for the drying process is preferably provided by cooled flue gasses, such as flue gasses exiting the heat exchanger. For the drying process, which is controlled so as to not exceed about 105°C, a low content of oxygen, such as in the cooled flue gasses exiting the heat exchanger, is not problematic.

The torrefied biomass and/or waste can be mixed in any proportion with coal, before being entered into the boiler. In one embodiment, the present invention consequently relates to a process of cofiring coal with biomass and/or waste.

In the inventive process, the utilization of the biomass fed into the process is over 40% and up to 100%.

The inventive dust fired power plant using biomass or waste provides for high efficacy and minimum emission.

In another aspect the claimed invention relates to solid fuel fired power plant for firing or cofiring of biomass and/or waste materials 1 comprising:
- a dryer 10 for drying biomass and/or waste materials 1;
- a torrefaction reactor 20 for torrefaction of the dried biomass and/or waste materials 15;
- a milling device 35 for comminuting the torrefied biomass and/or waste materials 21,26;
- a boiler 40 for combusting the comminuted and torrefied biomass and/or waste materials 36,37;
which power plant further comprises a gas-to-gas heat exchanger 30, and means 70,90,60 for conducting torrefaction gases obtained from torrefaction back into the torrefaction reactor after heating of said gases in the heat exchanger.

A further objective of the invention is to increase the fuel flexibility in an existing coal boiler.

As used herein the terms "waste", and "waste material" is intended to denote a solid, carbonaceous waste material, such as municipal solid waste.

### BRIEF DESCRIPTION OF THE DRAWINGS

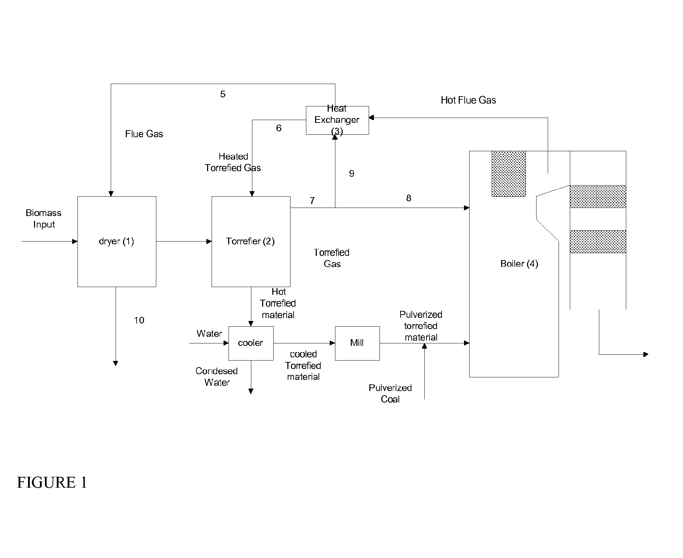

Figure 1 is schematic representation of the inventive process and power plant, wherein reference numeral 1 denotes biomass and/or waste material, 10 is a dryer, 20 a torrefaction reactor, 30 a heat exchanger, 40 a boiler, 35 a milling device.

### DETAILED DESCRIPTION OF THE INVENTION AND PREFERRED EMBODIMENTS THEREOF

The invention will now be described in detail with reference to the Figure.

The inventive plant comprises a dryer 10, a directly-heated torrefaction reactor 20, a heat exchanger 30, a milling device 35 and a boiler 40. In practice, a cooler 25 will typically be required for cooling the hot torrefied solid material before entering the milling device 35.

Raw, solid biomass and/or waste material 1 is first dried in dryer 10. The dried material 15 is then torrefied in torrefaction reactor 20. The torrefied solid biomass and/waste material, especially biomaterial, is very easy to mill into powder due to deploying of biomass fibers. Using biomass powder obtained by means of the inventive method in a conventional boiler in the plant of the invention, an existing combustion system for coal, which will include such conventional boiler, does not need substantial modification. In this way, it is also very easy to mix the torrefied material 21,26 with coal.

Torrefaction gases 70,80 are injected into the boiler 40, preferably into the reburn zone of said boiler, so that NOx emissions from the combustion in said boiler thereby can be reduced.

According to the type of biomass used in this system, 100% of biomass torrefaction may not be necessary. The degree of the torrefaction can be decided upon based on the difficulty of grinding the biomass, i.e. the grindibility thereof. The aiming of the torrefeaction process in the torrefaction reactor 20 can e.g. be, only 20% of torrefaction, if the thus-torrefied materials 21,26 can be readily ground using existing milling device 35 in the power plant.

The heat needed for the biomass torrefication process is preferably provided by the flue gas 45 obtained from the combustion in the boiler 40. This leads a very high energy efficiency.

The wet raw biomass and/or waste is passed into a dryer 1. The moisture content of the raw material is typically higher than 35% and up to 60%. The dryer is maintained at a temperature high enough to guarantee that the drying medium does not become saturated, but low enough that mild volatilization of the biomass is kept to a minimum. A typical temperature is 105°C when cooled flue gas 50 from a boiler 40 is used. The wet biomass is dried to about 10% to 15% moisture content according to the type of biomass used.

Alternatively, steam from the boiler 40 can be used as heat medium in the dryer 10. The dryer can e.g. be a rotary drum dryer, such as a triple-pass rotary drum dryer, or another conventional industrial dryer as is known in the art.

Moisture from the biomass that is vaporized in the dryer 10 is transported to waste water treatment via ductwork 100. Conventional and available waste water technology can be used for this purpose.

Dried biomass 15 is then fed into a directly-heated torrefaction reactor 20. In this reactor, the temperature is controlled in the range of 250-300°C. During this temperature, a portion of the volatile matter is drived off in the form of light gases, and other condensable organic compounds, which can be referred to as torrefied gases or torrefaction gases 70. The resulting solid torrefied material 21 contains less volatile matter, and increased fixed carbon content.

In the torrefaction reactor, the process is controlled not only by temperature, but also controlled by residence time. The torrefaction process can be evaluated by a parameter referred to as torrefaction degree, which is defined as the loss of volatiles mass divided by the total volatiles in the raw material. If all the volatiles are released during the process, this is defined as 100% of torrefaction degree. During this process, depending on the specific raw biomass used, the percentage of the volatiles loss varies. Typical numbers can e.g. be 10%, 30%, or 100% degree of torrefaction, wherein the volatiles are lost in the form of torrefied gases. The majority 90 of the torrefied gases 70 are circulated back to the reactor 20 after being heated by a heat exchanger 30.

The torrefaction reactor 20 can be any use available technology with directly heating method, such as a rotary drum reactor type, screw conveyor type, multiple hearth furnace, Torbed® reactor, belt conveyor type, or other conventional industrial dryer as is known in the art.

After passing through the gas-to-gas heat exchanger 30, the cooled flue gas 50 is directly back to the dryer 10 to serve as the drying medium. The gas-to-gas heat exchanger 30 heats the torrefied gases to 50°C to 100°C above the torrefaction temperature. The heat exchanger also conveys the flue gas to the dryer 10 via ductwork 50. Upon exiting the gas-to-gas heat exchanger 30 and entering into ductwork 60, the torrefied gases are fed back into the torrefaction reactor 20.

The heat source for heat exchanger 30 is provided by the hot flue gas 45 being extracted from the boiler 40. The typical location to extract the flue gas from the boiler 40 is at the place after the superheater. In this location, the temperature of the flue gas is about 300 to 700°C, preferably 300 to 500°C.

A portion of the torrefied gases is routed away from ductwork 70, via ductwork 80, to be fed to the upper part of the boiler 40 combustion chamber. These gases are injected as reburn fuel with the aim to reduce NOx emissions.

Torrefied solid biomass and/or waste 21 is preferably cooled in a cooler 25, by means of for example water, and then directed to a milling device 35 for grinding the cooled and torrefied material 26 into powder 36. The powder 36 is injected into the boiler 40 either directly, or mixed with coal before injection.

While the invention has been described above with reference to a pulverized coal (pc) boiler, boiler 40 can also be a, or grated coal fired boiler, or fluidized bed boiler, or waste incinerator etc., used for heat and power production, in which cases a milling device and milling step may not be required.

## Claims

1. An integrated process for firing of solid biomass and/or solid waste in existing solid fuel combustion power plants which process also includes torrefaction of the biomass and/or waste, and which process comprises the following steps:
- feeding a solid biomass and/or waste material (1,15) to a torrefaction reactor (20);
- heating the solid biomass and/or waste material in the torrefaction reactor at conditions effective for torrefaction of the biomass;
- passing gaseous reaction products (70,80) generated in the torrefaction reactor to a combustion process in the boiler (40); and
- feeding an additional, particulate fuel (36,37) to the combustion process in said boiler, which particulate fuel comprises the milled, torrefied biomass (36),
**characterized in that** a portion of the gaseous reaction products (90) generated in the torrefaction reactor are passed to a gas-to-gas heat exchanger (30) for heating of said gases, and the heated gases (60) thereafter are being passed back into the torrefaction reactor for providing the necessary heat for the torrefaction.

2. The process of claim 1, wherein the heating of the gaseous reaction products being passed back into the torrefaction reactor are heated by means of flue gases (45) from obtained from the combustion in the boiler.

3. The process of claim 1 or 2, including the additional step of drying (20) the biomass, preferably at a temperature not exceeding about 105°C.

4. The process of claim 3, wherein flue gases (50) obtained from the combustion in the boiler, after cooling of said gases, are being passed back into the dryer for drying of the biomass and/or waste contained therein.

5. The process of claim 3, wherein steam obtained from the boiler 40, is being passed back into the dryer for drying of the biomass and/or waste contained therein.

6. The process of any one of the previous claims, wherein the gaseous reaction products (70,80) generated in the torrefaction reactor which are being passed to the combustion process in the boiler enters said boiler at the upper portion thereof as a reburning fuel for reducing NOx emissions from the combustion.

7. The process of any one of the previous claims, wherein the solid fuel combustion power plant is a dust fired power plant, and the process further comprises the following step:
- passing the torrefied biomass and/or waste material (21,26) to a milling device (35).

8. The process of any one of the previous claims, wherein the additional, particulate fuel being fed into the boiler also comprises comminuted coal (37).

9. A solid fuel fired power plant for firing, or cofiring, of biomass and/or waste materials (1) comprising:
- a dryer (10) for drying biomass and/or waste materials (1);
- a torrefaction reactor (20) for torrefaction of the dried biomass and/or waste materials (15);
- a boiler (40) for combusting the comminuted and torrefied biomass and/or waste materials (36,37);
**characterized in** further comprising a gas-to-gas heat exchanger (30), and means (70,90,60) for conducting torrefaction gases obtained from torrefaction back into the torrefaction reactor after heating of said gases in the heat exchanger.

10. The power plant of claim 9, further comprising means (45) for conducting hot flue gases obtained from the boiler into the heat exchanger for heating the torrefaction gases (90).

11. The power plant of claim 10, further comprising means (50) for conducting cooled flue gases from the heat exchanger to the drier (10).

12. The power plant of claim 10, further comprising means for conducting steam from the boiler into the drier (10).

13. The power plant according to any one of claims 9-12, wherein the means (80) for introducing torrefaction gases into the boiler enters the boiler at the upper portion thereof.

14. A dust fired power plant according to any one of claims 1-13, further comprising a milling device (35) for comminuting the torrefied biomass and/or waste materials (21,26).

15. The dust fired power plant according to claim 14, wherein the boiler is an existing dust fired boiler, preferably a pc boiler.
